# EUROPEAN PATENT SPECIFICATION

(11) **EP 0 435 917 B1**
(45) Date of publication and mention of the grant of the patent: **31.08.1994**
(21) Application number: 89910682.7
(22) Date of filing: 19.09.1989
(51) Int. Cl.: B62K 21/16

(54) **ADJUSTABLE HANDLEBAR STEM FOR A BICYCLE OR SIMILAR VEHICLE**
ANPASSBARER LENKSTANGENSCHAFT FÜR EIN FAHRRAD ODER DERGLEICHEN
BROCHE DE GUIDON REGLABLE POUR BICYCLETTE OU VEHICULES SIMILAIRES

(30) Priority: 26.09.1988 NO 884179
(43) Date of publication of application: 10.07.1991
(73) Proprietor: HALS, Cato, N-0651 Oslo 6 (NO)
(72) Inventor: HALS, Cato, N-0651 Oslo 6 (NO)
(74) Representative: Wolff, Francis Paul
(86) International application number: PCT/NO89/00096
(87) International publication number: WO 90/03302

(56) References cited:
- BE-A- 0 523 314
- NO-A- 0 073 566

## Description

The present invention relates to an adjustable handlebar stem for bicycles, mopeds, motorcycles and furthermore all steerable devices which utilize a corresponding steering principle as a bicycle. More specifically, the invention relates to a simultaneous handlebar height and forward/backward position joint adjustment means which can be locked.

Until to-day, the bicycle has usually been equipped with a handlebar stem which only has the possibility for a straight up and down adjustment. However, special adjustable handlebar stem devices of various types are previously known, which are adapted for various purposes. Recently however, some handlebar stem manufacturers have in addition made it possible to vary the length of the handlebar stem protrusion. The result is that the handlebar may be placed in almost any position. When the position of the handlebar is to be varied, the handlebar itself must also be rotated in order that the brake handles shall fall into the hands in a natural and ergonometrically correct manner. In order to adjust the handlebar with the previously known handlebar stem device, one must consequently first loosen three bolts, thereafter move the handlebar into the desired position, and then refasten the same three bolts. The three bolts have the following respective purposes: a) adjusting the bicycle handlebar up and down,
b) adjusting the protrusion in a direction toward or away from the bicyclist, and c) rotating the handlebar itself around the handlebar main axis.

From Belgian patent no. 523 314 is previously known a device having certain qualities in common with the present invention, namely an adjustable device using two parallel arms which can be locked in a stepless manner by means of a wing nut in one of the bearing points in order to provide a handlebar adjustment substantially in height. The handlebar travel is from an upper extreme position, downward and forward, and thereafter further downward and backward again to a lower extreme position. Because of the parallellogram guiding the handlebar maintains its orientation in a vertical plane, i.e. its rotational orientation around the handlebar main axis, through the whole movement.

For quite some time the possibility of varying the body posture during cycling has been missed, in other words, there has been a want for a simple and practical device on the bicycle for providing such a possibility.

In the first place it is uncomfortable to sit bicycling in the same position for a long time. Secondly, by varying the sitting posture on the bicycle, a more effective bicycling is achieved.

When bicycling uphill, or possibly when bicycling at a higher speed on the flat, it is often found more efficient when the handlebar is in a low and relatively far advanced position. However, when bicycling in dense traffic, where a good view is necessary, it is often found most appropriate to sit in a relatively high and upright posture.

With a handlebar stem in accordance with the present invention, a lockable adjustment of the handlebar position is achieved in a simple manner, possibly while riding, and without the use of tools, and particularly ergonometrically correct and consequently wholesome and comfortable variation possibilities for the bicyclist's sitting posture are achieved.

The purpose stated above is obtained by putting into use a handlebar stem of the type which is defined precisely in the enclosed patent claims.

In a preferred embodiment of the adjustable handlebar stem in accordance with the invention, a possibility of varying the handlebar position is achieved along a curve over and in front of the bicycle frame. The curve runs from a position up and close to the bicyclist, to a position which is down and further away from the bicyclist. In accordance with the invention the adjustable handlebar stem is moved by merely loosening one single clamping device. After changing the handlebar position, the handlebar is clamped in a new position by relocking the clamping device. During movement of the handlebar from one position to another, the adjustable handlebar stem in accordance with the invention will provide rotation of the handlebar by itself.

The invention shall now be illuminated more closely by referring to a non-limiting embodiment example, and also referring to the drawings, where
fig. 1 shows a sketch of an embodiment of a handlebar stem in accordance with the invention, in a side view,
fig. 2 shows the travel of the movable parts in the handlebar stem in fig. 1,
fig. 3 shows the handlebar stem in two positions on a bicycle,
fig. 4 shows a perspective view of the handlebar stem,
fig. 5 shows an embodiment of a handlebar stem in accordance with the invention, comprising a locking means for fixed positions, in a side view, and
fig. 6 shows an example of an embodiment with a springing device.

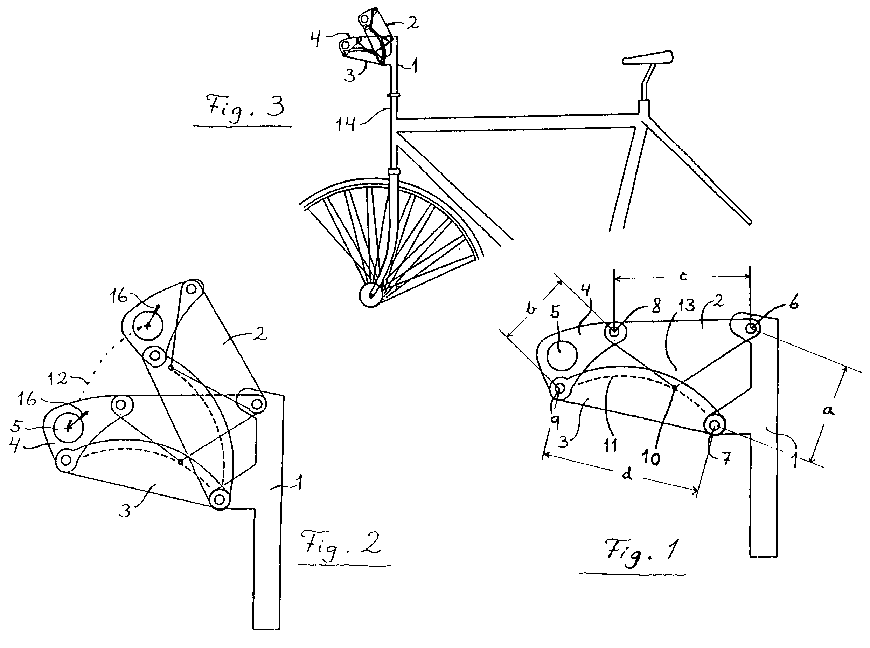

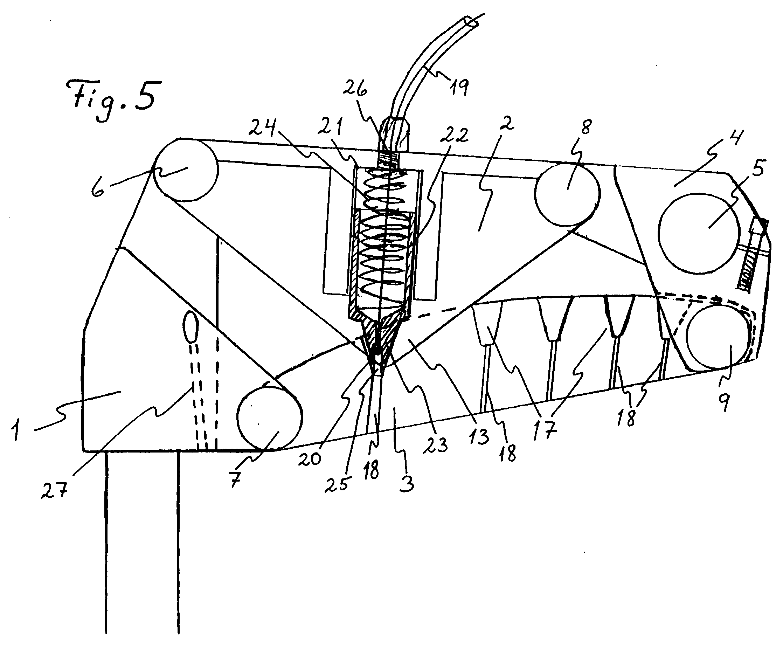

In fig. 1 is illustrated an example of a handlebar stem in accordance with the invention, in a side view. In the preferred embodiment the handlebar itself will be located in front of the handlebar stem post 1, which post shall be entered down into the forward bicycle frame tube 14 (see fig. 3) and clamped. The handlebar 15 (see fig. 4) is clamped in the hole 5 in a handlebar piece 4 in a per se well known manner, however this is only shown in fig. 4.

An upper profile arm 2 and a lower profile 3 are pivotably supported in both ends in bearing points 6, 7, 8 and 9, and thus it is possible to move the profile arms 2, 2 around the bearing points 6 and 7, in two directions until outer positions are reached where the geometry or the materialwise construction prevents further movement. The complete movable mechanism thus consists of four parts, where post 1 is in a fixed position when mounted on the bicycle. The two profile arms 2, 3 are both pivotably supported in both the handlebar piece and the post, so that they can rotate in dependence of each other around their two respective axis pairs.

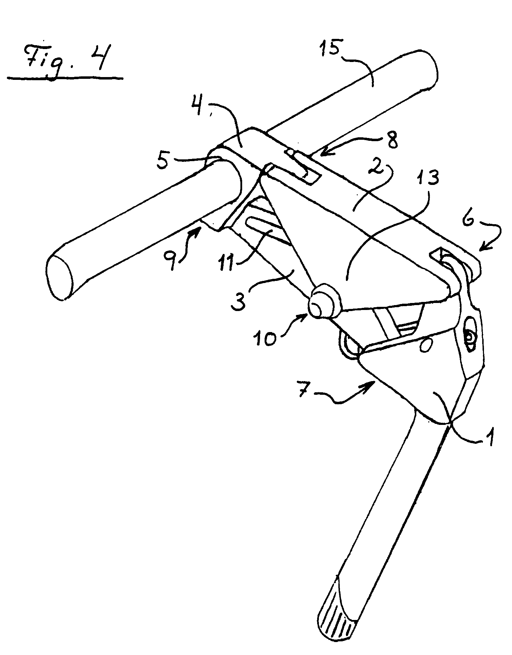

In the shown embodiment, a stud 10 on a protruding part 13 on the upper profile arm 2 provides, in combination with a groove 11 in the lower profile arm 3, a locking means in such a manner that the two profile arms 2 and 3 can be locked together in selectable positions between and out to the two outer positions, the upper outer position being shown in fig. 2. Furthermore it appears that the mechanism of fig. 2 can be moved a small distance further down/forward before reaching the lower outer position.

The particular feature of the handlebar stem in accordance with the invention is that the distance a between the two bearing points 6 and 7, as appears from fig. 1, is unequal to the corresponding distance b between bearing points 8 and 9 on the handlebar piece 4, and in the preferred embodiment shown here, a is larger than b. This fact ensures that when rotating from an upper position for the movable parts down to a lower position, the handlebar 15, being clamped in the hole 5, will rotate in the opposite rotation direction. This fact provides the correct ergonometric conditions when considering hand gripping ordinary brake handles fixedly mounted on the handlebar 15. In the upright position, see fig. 2, it is natural with a brake handle pointing in a slanted downward direction in connection with an upright body posture, but when it is desired to lower the handlebar in a forward direction and take a more efficient bicycling posture, the elbows are lowered at the same time, and the brake handle grip will naturally be more horizontally inclined. The movement of the handlebar stem in accordance with the present invention provides exactly such an effect. In fig. 2 this rotation effect is tentatively displayed in a clear manner by showing (a purely illustrative) indicator line 16, which in the drawing rotates in a clockwise direction when the handlebar is lowered in an anti-clockwise movement from above and down toward the left.

By providing an appropriate design of the profile arms 2 and 3, a simple and effective locking method is also achieved. For example, profile arm 3 is equipped with a groove 11, and stud 10 on the protruding part 13 on profile arm 2 gives a possibility for providing a locking means which in the shown embodiment is able to clamp the protruding part 13 solidly to the lower profile arm 3 in any of the possible positions.

Providing such simple and effective locking or clamping means which also may be operated while riding, is of course possible by means of ordinarily known techniques. One example of such a per se known locking device, well known from bicycle racing, is a wheel hub quick-clamp mechanism, and such a clamping device is both simple in use and sufficiently strong.

It is also possible to operate the locking means from a handle on the handlebar 15 itself.

Furthermore, it is possible to use other different types of locking means for clamping the two profile arms 2 and 3 solidly against each other, apart from the example shown in the drawings and providing a possibility for locking in any position between the outer positions.

The profile arms may be constructed with different design types, and the bearing points 6, 7, 8 and 9 can be located in different manners in relation to each other, so that various suitable travel curves 12 (see fig. 2) for the handlebar 15 are achieved. By locating the bearing points appropriately, the swing of the handlebar movement as well as the rotation of the handlebar during movement may be varied. As previously mentioned, the variations are achieved by moving the bearing points when constructing the stem, or by increasing their mutual spacings.

Thus, the most suitable and favourable type of construction is achieved by making the upper bearing point distance c (see fig. 1) shorter than the corresponding lower bearing points distance d. Hereby is achieved that the movement of the profile arms or possibly the handlebar piece 4 takes part substantially on the overside of a horizontal plane passing through pivot support point 7.

Since due to an ergonometric consideration it is unfortunate that the handlebar moves backwards again when moving downward, bearing point spacings as well as remaining material design are preferably chosen in such a manner that the lower outer position of the profile arms movement at the same time constitutes a maximum forward protruding position of the handlebar.

Furthermore, it should be noted that the four part construction described here, in the preferred embodiment has the particular feature that profile arms 2 and 3 are pivotably supported directly on the handlebar piece 4, so that the movable mechanism constituted by handlebar piece 4, profile arms 2 and 3 and post 1, is an integrated and strong unit, in contrast to the previously known solution of the most closely related type, which in the known parallellogram guiding system displays separate clamps gripping around additional posts at each end. Thus, a construction like the one presented in the present invention, entails large advantages also when considering construction strength.

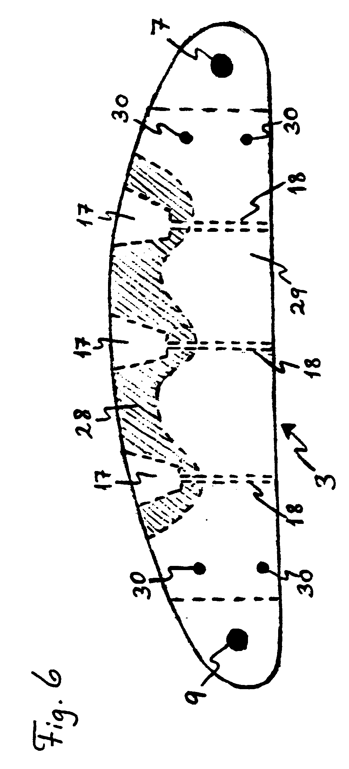

As previously mentioned, it is possible to use various types of locking mechanism. In fig. 5 is shown a possibility with fixed locking positions.

Here the lower profile arm 3 is equipped with recesses 17 in its top surface. The recesses 17 have a substantially truncated wedge- or conical shape, and from the bottom of each recess 17 a thin hole 18 is drilled right down to the underside of profile arm 3 for leading a pulling wire 19 with an end ball 20 therethrough for an eventual change of wire.

In the upper profile arm 2 there is formed an internal, downward directed bore 21, in which a slideable plunger 22 is located. Said plunger 22 has in its lower end 23 a shape which is complementary in relation to the recess shape, so that the lower end 23 can enter one of the recesses 17 with a tight fit.

A strong spiral spring 24 placed in the bore 21 also pushes the plunger 22 downward into solid engagement with the recess 17.

In order to hoist the plunger 22 for a change of position, there is arranged in the lower conical or wedge-shaped end 23 an aperture 25 aligned with hole 18, and with the same diameter, and aperture 25 is narrowing some distance up inside plunger end 23, in such a manner that a shoulder area is formed for engagement by the wire end ball 20, and the continuation of the aperture in the up direction has such a diameter that only the cable 19 itself can pass through it. Said wire 19 continues in an up direction centrally in plunger 22 and bore 21, and further through a nipple 26 on the top side of the upper profile arm 2 and further as a central wire in a Bowden cable.

By pulling a not shown handle in the other end of said Bowden cable, plunger 22 can thus be hoisted out and up from the recess 17 in question, against the force from spring 24. When plunger 22 has been hoisted clear from the top side of lower profile arm 3, the bicyclist may move the handlebar 15 (fig. 4) rapidly into one of the other fixed positions, plunger 22 sliding on the top side of lower arm 3 and striking down into the closest recess 17 in accordance with the motion, if the Bowden cable is released prior to having reached the desired position.

As shown in fig. 5, the handlebar stem post 1 may suitably be equipped with a hole 27 for leading the front wheel brake wire therethrough.

In order to achieve the further effect that the handlebar stem provides a favourable spring action, which may be of special interest when bicycling on a very rough (road) surface, the lower profile arm 3 in the last mentioned embodiment with fixed locking positions may be equipped with a part 28 or 29 of elastic material, for example hard rubber, see fig. 6.

In fig. 6 only lower profile arm 3 is shown in an embodiment with three recesses 17. One possibility is that a smaller (hatched) part 28 around the recesses is made of hard rubber. Fixing screws are shown at 30, the whole inner central section 29 (inside a strong outer metal frame) of lower profile arm 3 being removable. The fact is that when using an elastic material 28, a certain degree of wear must be counted on, so that the central section 29 must be changed after having been used for some time.

Possibly the whole central section 29 (inside a strong outer metal frame) may consist of hard rubber, and it may be removable in the same manner as mentioned above.

Suitably the plunger 22 should also be removable in a simple manner from the top side of upper profile arm 2, the whole bore section for example being removable from the top side by screwing, and the possibility of removing the recess part in lower arm 3 in connection with the resilient embodiment may also be utilized for a non-resilient embodiment, i.e. a central part of lower profile arm 3 which comprises the recesses 17, may generally be arranged in a removable manner.

## Claims

1. Adjustable handlebar stem for a bicycle or similar vehicle, said handlebar stem comprising a post (1) adapted to be entered and clamped inside the forward frame tube (14) of the bicycle, said post (1) substantially at the top and a predetermined distance a thereunder being equipped with two first bearings (6, 7) with parallel bearing axes which are horizontal when the bicycle is standing in a normal position, said bearings (6, 7) pivotably supporting two profile arms, one upper (2) and one lower (3), said profile arms (2, 3) in their distal ends in relation to said post (1) also being in a pivotable support relation to a handlebar piece (4) by means of upper (8) and lower (9) second bearings with axes which are parallel to said bearing axes of said first bearings (6, 7), said handlebar piece (4) being equipped with a horizontal hole (5) for admitting and clamping the bicycle handlebar (15), parallel to said bearing axes, said handlebar stem further comprising a locking means for arresting and locking the movable system which comprises said profile arms (2, 3) and said handlebar piece (4), in a position between, or equal to one of, two extreme positions for the travel of said system (2, 3, 4), **characterized** in that the distance b between the two second bearings (8, 9) is unequal to the distance a between the two first bearings (6, 7), whereby the rotational orientation of said handlebar piece (4), and consequently said handlebar (15), about the axis of said hole (5) are variable when moving said system (2, 3, 4) between said two extreme positions.

2. Handlebar stem as claimed in claim 1, **characterized** in that distance b is smaller than distance a, said two second bearings (8, 9) being located in front of said two first bearings when viewed in the riding direction.

3. Handlebar stem as claimed in claim 2, **characterized** in that upper bearing distance c between the upper one (6) of said two first bearings and said upper second bearing (8), is shorter than lower bearing distance d between the lower one (7) of said two first bearings and said lower second bearing (9), whereby it is achieved that the movement of said profile arms (2, 3), eventually said handlebar piece 4, takes part substantially on the overside of a horizontal plane passing through the lower one (7) of said two first bearings.

4. Handlebar stem as claimed in claim 1, 2 or 3, **characterized** in that one of said two profile arms (2, 3) is equipped with a groove (11) for sliding guide cooperation with a stud (10) on a protruding part (13) on the other of said profile arms (3, 2), said stud (10) being lockable in any position in said groove (11), said protruding part (13) including said stud (10) being equipped with said locking means.

5. Handlebar stem as claimed in claim 4, **characterized** in that said locking means, said groove (11), said stud (10) and said protruding part (13) are adapted for opening, adjusting and locking while riding, said locking means in combination with said stud (10) preferably being constituted by a quick-release clamping device.

6. Handlebar stem as claimed in claim 1, 2 or 3, **characterized** in that said lower profile arm (3) is equipped with a number, for example five, of substantially truncated wedge- or conically shaped recesses (17) on its top surface, adapted for engaging cooperation with a spring loaded plunger (22) in a bore (21) in the upper profile arm (2), said plunger (22) having a lower end (23) shaped complementarily to the shape of said recesses (17) and hoistable by means of a pull-wire (19) against the force from an internally arranged spring (24) in said plunger (22) and bore (21), whereby said plunger (22) and said recesses (17) constitute said locking means and provide locking action in said number of fixed positions.

7. Handlebar stem as claimed in claim 6, **characterized** in that a part (28, 29) of said lower profile arm (3) which comprises said recesses (17), is made of a relatively hard elastic material, for example hard rubber, for obtaining a somewhat springing action.

8. Handlebar stem as claimed in any one of the preceding claims, **characterized** in that said locking means is adapted to be operated by means of a handle on said handlebar (15).

9. Handlebar stem as claimed in any one of the preceding claims, **characterized** in that geometry and/or material design is/are chosen in such a manner that a lower extreme position for the movement of said profile arms (2, 3) at the same time constitutes a maximum forward protruding position of said handlebar (15).

10. Handlebar stem as claimed in any one of the preceding claims, **characterized** in that said profile arms (2, 3) are pivotably supported directly onto said handlebar piece (4), so that said handlebar piece (4), profile arms (2, 3) and said post (1) constitute an integrated unit.

## Patentansprüche

1. Verstellbares Lenkstangenrohr für ein Fahrrad oder ähnliches Fahrzeug, wobei dieses Lenkstangenrohr einen Halter (1) aufweist, der zum Einführen in das und Festklemmen in dem volderen Rahmenrohr (14) des Fahrrades geeignet ist, wobei dieser Halter (1) im wesentlichen am oberen Ende und in einem bestimmten Abstand darunter mit zwei ersten Lagern (6, 7) mit parallelen Lagerachsen ausgestattet ist, die horizontal verlaufen, wenn das Fahrrad in einer Normalstellung steht, wobei diese Lager (6, 7) schwenkbar zwei Profilträger, einen oberen (2) und einen unteren (3), halten, wobei diese an ihrem einen Ende in Verbindung mit dem Halter (1) stehenden Profilträger (2, 3) mittels eines zweiten oberen (8) und unteren (9) Lagers mit zu den Lagerachsen der ersten Lager (6, 7) parallelen Achsen in einer schwenkbaren Halteverbindung zu einem Lenkerstangen-Bauteil (4) stehen, wobei dieses Lenkerstangen-Bauteil (4) mit einer Horizontalbohrung (5) zur Aufnahme und zum Festklemmen der Fahrrad-Lenkerstange (15) ausgestattet ist, die parallel zu den Lagerachsen verläuft, wobei das Lenkstangenrohr weiterhin ein Fixiermittel zum Arretieren und Fixieren des die Profilträger (2, 3) umfassenden beweglichen Systems und des Lenkstangen-Bauteils (4) in einer Stellung zwischen den oder identisch mit einer der beiden Extremstellungen bei der Bewegung dieses Systems (2, 3, 4) aufweist,
dadurch **gekennzeichnet,**
daß der Abstand b zwischen den beiden zweiten Lagern (8, 9) ungleich dem Abstand a zwischen den beiden ersten Lagern (6, 7) ist, wobei die dem Drehwinkel entsprechende Ausrichtung des Lenkstangen-Bauteils (4) und folglich die der Lenkstange (15) um die Achse der Bohrung (5) veränderlich sind, wenn das System (2, 3, 4) zwischen den beiden Extremstellungen bewegt wird.

2. Lenkstangenrohr gemäß Anspruch 1,
dadurch **gekennzeichnet**,
daß Abstand b kleiner als Abstand a ist, wobei die beiden zweiten Lager (8, 9) in Fortbewegundsrichtung gesehen vor den beiden ersten Lagern angeordnet sind.

3. Lenkstangenrohr gemäß Anspruch 2,
dadurch **gekennzeichnet**,
daß der obere Lagerabstand c zwischen dem oberen (6) der beiden ersten Lager und dem oberen zweiten Lager (8) kürzer als der untere Lagerabstand d zwischen dem unteren (7) der beiden ersten Lager und dem unteren zweiten Lager (9) ist, wobei erreicht wird, daß die Bewegung der Profilträger (2, 3), gegebenenfalls des Lenkstangen-Bauteils (4), im wesentlichen über der Oberseite einer horizontalen, durch das untere (7) der beiden ersten Lager verlaufende Ebene verläuft.

4. Lenkstangenrohr gemäß einem der Ansprüche 1, 2 oder 3,
dadurch **gekennzeichnet**,
daß einer der beiden Profilträger (2, 3) mit einer Ausnehmung (11) zur Gleitführung in Zusammenwirkung mit einem Stift (10) an einem vorspringenden Bereich (13) auf dem anderen der Profilträger (3, 2) ausgestattet ist, wobei dieser Stift (10) in jeder Stellung in dieser Ausnehmung (11) fixierbar ist und dieser vorspringende, den Stift (10) umfassende Bereich (13) mit dem Fixiermittel ausgestattet ist.

5. Lenkstangenrohr gemäß Anspruch 4,
dadurch **gekennzeichnet**,
daß dieses Fixiermittel, die Ausnehmung (11), der Stift (10) und der vorspringende Bereich (13) zum Öffnen, Verstellen und Fixieren während des Fahrens geeignet sind, wobei das Fixiermittel in Kombination mit dem Stift (10) vorzugsweise als eine Schnellklemmvorrichtung ausgebildet ist.

6. Lenkstangenrohr gemäß einem der Ansprüche 1, 2 oder 3,
dadurch **gekennzeichnet**,
daß der untere Profilträger (3) auf seiner oberen Oberfläche mit einer Anzahl von, z.B. mit fünf, im wesentlichen stumpfkeil- oder -kegelförmigen Aussparungen (17) versehen ist, die geeignet sind, mit einem unter Federspannung stehenden Dorn (22) in einer Bohrung (21) im oberen Profilträger (2) in Zusammenwirkung zu treten, wobei dieser Dorn (22) ein komplementär zu der Form dieser Aussparungen (17) geformtes und mittels eines Handzugs (19) gegen die Kraft einer innerhalb des Dorn (22) und der Bohrung (21) angeordneten Feder (24) anhebbares unteres Ende (23) besitzt und wobei der Dorn (22) und die Aussparungen (17) das Fixiermittel darstellen und die Fixierung in besagter Anzahl von festgelegten Stellungen zu ermöglichen.

7. Lenkstangenrohr gemäß Anspruch 6,
dadurch **gekennzeichnet**,
daß ein Bereich (28, 29) des unteren Querträgers (3), der die Aussparungen (17) aufweist, aus einem relativ harten elastischen Material, z.B. Hartgummi, gefertigt ist, um eine gewisse Federwirkung zu erzielen.

8. Lenkstangenrohr gemäß einem der vorhergehenden Ansprüche,
dadurch **gekennzeichnet**,
daß das Fixiermittel mittels eines Griffes auf der Lenkstange (15) bedient werden kann.

9. Lenkstangenrohr gemäß einem der vorhergehenden Ansprüche
dadurch **gekennzeichnet**,
daß die Geometrie und/oder der Materialaufbau auf solche Weise ausgewählt ist/sind, daß eine untere Extremstellung in der Bewegung der Profilträger (2, 3) gleichzeitig eine maximal nach vorne stehende Stellung der Lenkstange (15) bildet.

10. Lenkstangenrohr gemäß einem der vorhergehenden Ansprüche,
dadurch **gekennzeichnet**,
daß die Profilträger (2, 3) direkt auf dem LenkstangenBauteil (4) schwenkbar gelagert sind, so daß das Lenkstangen-Bauteil (4), die Querträger (2, 3) und der Halter (1) eine integrale Einheit bilden.

## Revendications

1. Potence de guidon réglable pour bicyclette ou véhicule analogue, ladite potence de guidon comprenant un montant (1) adapté de façon à entrer et à être serrée à l'intérieur du tube de cadre (14) avant de la bicyclette, ledit montant (1) étant pourvu, pratiquement au sommet à une distance prédéterminée a au dessous de lui, de deux premier paliers (6, 7) présentant des axes de paliers parallèles, qui sont horizontaux lorsque la bicyclette est placée debout dans une position normale, lesdits paliers (6, 7) supportant à pivotement deux bras profilés, un bras supérieur (2) et un bras inférieur (3), lesdits bras profilés (2, 3) étant également, au niveau de leurs extrémités distales par rapport audit montant (1), en relation de support pivotant avec une pièce formant guidon (4), au moyen de second paliers supérieur (8) et inférieur (9) dont les axes sont parallèles auxdits axes de palier desdits premier paliers (6, 7), lesdites pièces formant guidon (4) étant pourvues d'un trou horizontal (5) servant à loger et à serrer le guidon de bicyclette (15), parallèlement auxdits axes de palier, ladite potence de guidon comprenant en outre un moyen de verrouillage servant à bloquer et à verrouiller le système déplaçable qui comprend lesdits bras profilés (2, 3) et ladite pièce formant guidon (4), dans une position située entre, ou égale à l'une des deux positions extrêmes de la trajectoire dudit système (2, 3, 4), caractérisée en ce que la distance b entre les deux second paliers (8, 9) n'est pas égale à la distance a entre les deux paliers (6, 7), de manière que l'orientation en rotation de ladite pièce formant guidon (4) et, par conséquent, dudit guidon (15), autour de l'axe dudit trou (5), puisse varier lors du déplacement dudit système (2, 3, 4) entre lesdites deux positions extrêmes.

2. Potence de guidon selon la revendication 1, caractérisée en ce que la distance b est inférieure à la distance a, lesdits deux second paliers (8, 9) étant situés à l'avant desdits deux premier paliers, lorsqu'on observe dans la direction de conduite de la bicyclette.

3. Potence de guidon selon la revendication 2, caractérisée en ce qu'une distance de palier c supérieur, entre le palier supérieur (6) desdits deux premiers paliers et ledit second palier supérieur (8), est inférieur à une distance de palier d inférieur entre le palier inférieur (7) desdits deux premier paliers et ledit second palier inférieur (9), de manière que le déplacement desdits bras profilés (2, 3), éventuellement de ladite pièce formant guidon (4), ait lieu pratiquement sur les cotés supérieurs d'un plan horizontal passant par le palier inférieur (7) desdits deux premiers paliers.

4. Potence de guidon selon la revendication 1, 2 ou 3, caractérisée en ce que l'un desdits deux bras profilés (2, 3) est pourvu d'une rainure (11) destinée à coopérer par un guidage coulissant avec un goujon fileté (10) situé sur une partie saillante (13), sur l'autre desdits bras profilés (3, 2), ledit goujon profilé (10) pouvant être verrouillé dans toute position dans ladite rainure (11), ladite partie saillante (13) comprenant ledit goujon fileté (10) pourvu desdits moyens de verrouillage.

5. Potence de guidon selon la revendication 4, caractérisée en ce que lesdits moyens de verrouillage, ladite rainure (11), ledit goujon fileté (10) et ladite partie saillante (13) sont adaptés de façon à ouvrir, à régler et verrouiller tout en conduisant, lesdits moyens de verrouillage en combinaison avec ledit goujon (10), de préférence constitué par un dispositif de serrage à libération rapide.

6. Potence de guidon selon la revendication 1, 2, ou 3, caractérisée en ce que ledit bras profilé inférieur (3) est pourvu d'un certain nombre, par exemple cinq, de cavités (17) de forme conique ou sensiblement tronconique, sur sa face supérieure, adaptées afin de coopérer par contact avec un piston (22) sollicité élastiquement, situé dans un alésage (21) ménagé dans le bras profilé supérieur (2), ledit piston (22) présentant une extrémité inférieure (23), de forme complémentaire à la forme desdites cavités (17) et pouvant être soulevée au moyen d'un câble de traction (19), à l'encontre de la force exercée par un ressort (24) disposé intérieurement dans ledit piston (22) et l'alésage (21), de manière que ledit piston (22) et lesdites cavités (17) constituent ledit moyen de verrouillage et exercent une action de verrouillage dans ledit nombre de positions fixes.

7. Potence de guidon selon la revendication 6, caractérisée en ce qu'une partie (28, 29) dudit bras profilé inférieur (3), qui comprend lesdites cavités (17), est réalisée en une matière élastique relativement rigide, par exemple du caoutchouc dur, afin d'obtenir une action quelque peu élastique.

8. Potence de guidon selon l'une quelconque des revendications précédentes, caractérisée en ce que ledit moyen de verrouillage est adapté de façon à être actionné au moyen d'une poignée située sur ledit guidon (15).

9. Potence de guidon selon l'une quelconque des revendications précédentes, caractérisée en ce que la forme et/ou la conception matérielle est/sont choisie(s) de manière qu'une position extrême inférieure, servant au déplacement desdits bras profilés (2, 3), constitue en même temps une position maximale saillant vers l'avant dudit guidon (15).

10. Potence de guidon selon l'une quelconque des revendications précédentes, caractérisée en ce que lesdits bras profilés (2, 3) sont montés pivotant directement sur ladite pièce formant guidon (4), de manière que ladite pièce formant guidon (4), les bras profilés (2 et 3) et ledit montant (1) constituent un ensemble intégré.
